# EUROPÄISCHE PATENTANMELDUNG

(11) **EP 3 091 548 A1**
(43) Veröffentlichungstag der Anmeldung: **09.11.2016**
(21) Anmeldenummer: 16160365.9
(22) Anmeldetag: 15.03.2016
(51) Int. Cl.: H01H 9/18, H01H 23/04, H02G 3/08

(54) **INSTALLATIONSGERÄT DER HAUS- ODER GEBÄUDEINSTALLATIONSTECHNIK MIT ERWEITERTER FUNKTIONALITÄT**

(30) Priorität: 07.05.2015 DE 102015005735
(71) Anmelder: ABB AG, 68309 Mannheim (DE)
(72) Erfinder: Wieske, Stefan, 58285 Gevelsberg (DE); Lehnert, Christian, 58239 Schwerte (DE); Fröhling, Marcel, 58579 Schalksmühle (DE); Krummel, Holger, 58515 Lüdenscheid (DE)

(57) **Zusammenfassung**

Installationsgerät der Haus- oder Gebäudeinstallationstechnik mit erweiterter Funktionalität für die Gebäudesystemtechnik mit einem Schalt- oder Funktions-einsatz (4), einem Gehäuseteil (5) und Kontaktelementen für einen Anschluss an externe Anschlussleitungen und einem Abdeckrahmen, dadurch gekennzeichnet, dass wenigstens ein Sensor- und/oder Funkmodul (11) vom Abdeckrahmen (3) aufgenommen ist, welcher wenigstens einen Bauraum (31) zur Aufnahme des Sensor- und Funkmoduls (11) aufweist und das Sensor- und Funkmodul (11) Mess- und Übertragungsfunktionen der Gebäudesystemtechnik realisiert.

## Beschreibung

Die Erfindung betrifft ein elektrisches oder mechanisches Installationsgerät der Haus- oder Gebäudeinstallationstechnik mit erweiterter Funktionalität für die Gebäudesystemtechnik gemäß dem Oberbegriff des Anspruchs 1. Das erfindungsgemäße Installationsgerät kann beispielsweise als Installationsschalter oder -taster, Dimmer oder Steckdose ausgeführt sein. Weiterhin betrifft die Erfindung einen Abdeckrahmen für ein Installationsgerät der Haus- oder Gebäudeinstallationstechnik mit mindestens einem Sensor- und/oder Funkmodul für Zusatzfunktionen der Gebäudesystemtechnik.

Die Erfindung geht von einem mechanischen Gerät der Elektroinstallationstechnik aus, welches beispielsweise aus einem Schalteinsatz mit darauf angeordnetem Tragrahmen bzw. Tragring und einem auf den Schalteinsatz aufsteckbarem Bedienteil aufgebaut ist. Das Installationsgerät wird komplettiert durch einen Abdeckrahmen, welcher üblicherweise lediglich als Designelement unterschiedlicher Schalterprogramme genutzt wird.

Derartige mechanische Installationsgeräte sind aus der DE 25 21 753 C3 als beleuchtete elektrische Installationsgeräte, umfassend einen Gerätesockel mit darauf montiertem Tragrahmen und einem Schalteinsatz sowie Kontaktelementen für einen Anschluss an externe Anschlussleitungen und dem Abdeckrahmen, bekannt. Die dort beschriebenen Schalter oder Taster sind mit einem Betätigungsglied, das mit den Funktionsteilen des Schalteinsatzes zusammenwirkt, und mit einem Beleuchtungselement versehen, welches im Schalteinsatz angeordnet ist.

Weiterhin sind elektrische Installationsgeräte bekannt, die einen Gerätesockel für einen Steckdoseneinsatz aufweisen. Auch hier ist der Gerätesockel mit einem Tragrahmen ausgestattet und wird in einem Installationsgeräteeinsatz mittels des Tragrahmens befestigt sowie durch einen Abdeckrahmen komplettiert.

Als Abdeckrahmen sind sowohl 1fach-Abddeckrahmen, 2fach- Abdeckrahmen oder mehrfach- Abdeckrahmen bekannt.

Es existieren bereits elektrische Installationsgeräte, die mit Gerätefunktionen ausgestattet sind. Dazu zählen beispielsweise Präsenzmelder und Bedienschalter mit Temperaturanzeige bzw. Temperaturregelung.

Die gegenwärtig verfügbaren Temperaturregler oder Präsenzmelder nutzen Messsensoren, welche Umgebungsinformationen erfassen und in der Regel an eine Zentrale oder an ein Anzeigegerät übermitteln.

Typischerweise sind diese Geräte mit einer lokalen Anzeige zur Messwertdarstellung ausgestattet oder verfügen über eine Funkkommunikation.

Der Erfindung liegt demgemäß die Aufgabe zugrunde, ein Installationsgerät der Haus- oder Gebäudeinstallationstechnik bereitzustellen, welches in einfacher Weise mit zusätzlichen Funktionalitäten der Gebäudesystemtechnik, wie beispielsweise Messfunktionen von Umweltbedingungen, zu denen u.a. Temperatur, CO2- Gehalt der Raumluft, Druck, Feuchtigkeit und Helligkeit im Raum, zählen, ausgestattet ist.

Diese Aufgabe wird erfindungsgemäß durch ein elektrisches oder mechanisches Installationsgerät der Haus- oder Gebäudeinstallationstechnik mit erweiterter Funktionalität für die Gebäudesystemtechnik mit den Merkmalen des Anspruches 1 gelöst. Vorteilhafte Ausgestaltungen der Erfindung ergeben sich aus der Beschreibung, den Figuren und den weiteren Ansprüchen.

Das erfindungsgemäße elektrische oder mechanische Installationsgerät mit erweiterter Funktionalität für die Gebäudesystemtechnik ist aus einen Gehäuseteil oder Gerätesockel, einem Schalteinsatz oder Funktionseinsatz, Kontaktelementen für einen Anschluss an externe Anschlussleitungen und einem Abdeckrahmen aufgebaut.

Erfindungsgemäß ist der Abdeckrahmen mit wenigstens einem Bauraum ausgestattet, in welchem wenigstens ein Sensor- und/oder Funkmodul integriert ist, um Zusatzfunktionen, wie Mess- und/oder Übertragungsfunktionen, der Gebäudesystemtechnik zu realisieren.

Das Sensor- und/oder Funkmodul kann erfindungsgemäß rückseitig, seitlich oder vorderseitig am oder im Abdeckrahmen angebracht bzw. eingesteckt sein.

In vorteilhaften Ausführungsformen der Erfindung ist das Sensor- und/oder Funkmodul in oder auf den Abdeckrahmen eines Unterputz- oder Aufputzschalters, -tasters, - dimmers oder -steckdose verbaut.

Beispiele für Sensor- und/oder Funkmodule, die in oder auf den Abdeckrahmen verbaut werden, sind der HomeMatic 76923 Funk-Temperatursensor, -Luftfeuchtesensor HM-WDS10-TH-O der Firma eQ-3 AG und der BME680 MEMS Sensor der Firma Bosch, welcher vier Sensoren in einem Gehäuse kombiniert, als Umweltsensor arbeitet und gleichzeitig Luftdruck, Feuchtigkeit, Temperatur und Raumluftqualität misst sowie die Messergebnisse der Raumluftqualität u.a. Smartphones zur Verfügung stellt.

Auch die in den Temperaturreglern 109U der Firma Busch-Jaeger verwendeten Messsensoren sowie die Sensoren CRM100, CAS200 und CMS300 der Firma Silicon Sensing sind Beispiele für Messsensoren, die das erfindungsgemäße Sensor- und/oder Funkmodul aufweisen kann.

Durch die Integration der Mess- und/oder Übertragungsfunktionen in oder am Abdeckrahmen bieten sich unterschiedliche Arten der Energieversorgung für das Sensor- und/oder Funkmodul an.

In einer vorteilhaften Ausführungsform des erfindungsgemäßen Installationsgerätes ist die Energieversorgung des Sensor- und/oder Funkmoduls über Anschlussklemmen des Schalter- oder Funktionseinsatzes realisiert. Dazu bietet sich die Energieversorgung zwischen dem im oder am Abdeckrahmen befindlichen Sensor- und/oder Funkmodul und den Kontaktelementen für einen Anschluss an externe Anschlussleitungen des Schalter- oder Funktionseinsatzes an.

Beispielsweise sind Kontaktflächen oder Kontaktstifte in den Abdeckrahmen eingelassen, umspritzt oder eingerastet, die mit entsprechenden Kontaktteilen am Schalt- oder Funktionseinsatz eine elektrisch leitende Verbindung bilden.

Ist das Sensor- und/oder Funkmodul in einer, vorzugsweise als Spritzgussteil ausgeführten Aufnahme untergebracht, welche am Rahmen befestigt ist, können die Kontaktstifte von diesem eigenständigen Spritzgussteil aufgenommen sein, welches an den Rahmen klippbar ist. Alternativ kann das Spritzgussteil an den Rahmen angeklebt sein, wodurch in vorteilhafter eine problemlose Nachrüstung an jedem Rahmen gegeben ist.

In einer zweiten Ausführungsform ist eine neue Rahmenvariante zum Austausch gegen den installierten Rahmen vorgesehen. Das Sensor- und/oder Funkmodul ist in einem von einer Blindabdeckung des Rahmens gebildetem Bauraum untergebracht.

Die neue Rahmenvariante mit integrierten Kontaktflächen oder Kontaktstiften ist deckungsgleich zu den Kontaktflächen des Funktions- oder Schalteinsatz ausgestaltet und stellt eine elektrisch leitende Verbindung zwischen dem im Rahmen befindlichem Sensor- und/oder Funkmodul und den Kontaktelementen für einen Anschluss an externe Anschlussleitungen bereit.

In einer weiteren Ausführungsform sind die Kontaktflächen oder Kontaktstifte auf der Oberseite des Geräteeinsatzes eingelassen, umspritzt oder eingerastet. Alternativ können auch Durchbrüche im Installationsgerät realisiert werden, welche die eingesetzten Kontaktflächen oder Kontaktstifte durch das Gehäuseteil oder den Geräteeinsatz des Installationsgerätes zu den Kontaktelementen führen.

Ist auf den Gerätesockel ein Tragring oder Tragrahmen montiert, kann auch vorgesehen sein, isolierte Kontaktflächen oder Kontaktstifte durch Öffnungen im Tragring zu den Kontaktelementen zu führen.

Bei den vorab beschriebenen Ausführungsformen zum Betrieb des Sensor- und/oder Funkmoduls wird die Energieversorgung über Anschlussklemmen des Schalter- oder Funktionseinsatzes realisiert.

In einer besonders vorteilhaften Ausgestaltung des erfindungsgemäßen Installationsgerätes ist der Abdeckrahmen mit einer als Batterieversorgungseinheit oder Akkumulatoreinheit ausgeführten Energieversorgungseinheit ergänzt. Diese Ausgestaltung ist in der Figurenbeschreibung näher ausgeführt.

Dadurch, dass im oder am Rahmen des Installationsgerätes das Sensor-und/oder /Funkmodul untergebracht ist, können eine Vielzahl von Zusatzfunktionen der Gebäudesystemtechnik realisiert werden. Dazu zählen beispielsweise:
- Sendefunktionen, wobei das Sensor-/Funkmodul als Infrarot- Sender, Ultraschallsender, usw. genutzt wird;
- Messfunktionen zur Erfassung von Raum- oder Außentemperatur, je nachdem ob es sich um ein Installationsgerät für den Innen- oder Außenbereich handelt;
- Messfunktionen zur Erfassung von Raum- oder Außenluftfeuchte und Luftdruck, je nachdem ob das Installationsgerät für den Innen- oder Außenbereich vorgesehen ist;
- Messfunktionen zur Erfassung von Luftdruck, CO2, CO, NOX, flüchtigen organischen Verbindungen (VOC);
- Messfunktionen zur Erfassung von Umweltgasen, welche das Raumklima zusätzlich zur Temperatur und Luftfeuchte beeinflussen und dazu dienen Gefahrensituationen zu erkennen;
- Messfunktionen zur Erfassung von Druckänderungen in einem Gebäudeteil, beispielsweise, wenn ein Fenster geöffnet wird;
- Messfunktionen zur Erfassung von Druckwellen, welche durch akustische Quellen erzeugt werden und zu denen beispielsweise Lautstärke, Frequenz, Abklingzeit/Nachhall zählen;
- Messfunktionen zur Erfassung von Licht in entsprechenden Spektren, beispielsweise Kunstlicht, Tageslicht, usw;
- Messfunktionen zur Erfassung von Erschütterungen ausgelöst durch Schließen von Türen, Fenstern oder Laufbewegungen usw., eine Analyse von abgeleiteten Mustern direkt im Sensormodul; und
- Messfunktionen zur Erfassung des Erdmagnetfeldes oder der elektrischen Feldstärke von Sendern mit einer bestimmten Frequenz, beispielsweise um elektronische "Licht"-Schranken zu realisieren.

Durch die Integration des Sensor- und/oder Funkmoduls mit der entsprechenden Mess- und/oder Sendefunktion in oder am Rahmen des Installationsgerätes steht eine permanente Energieversorgung (z.B. 230 V; als 2- und 3-Draht Version) zur Verfügung, welche die Messfunktion als auch Sende-/Übertragungsfunktion sicherstellt.

Das Funkmodul nutzt beispielsweise folgende Übertragungstechniken:
- Bluetooth (BT), BT Low Energy, BT Smart
- ZigBee, ZigBee Low Energy
- WiFi
- NFC
- ANT/ANT+
- DECT
- HomePlug (GreenPhy)
sowie weitere proprietäre Funklösungen und weitere Powerline Communication Übertragungstechniken.

In einer weiteren Ausgestaltung sind die in oder am Rahmen der Installationsgeräte befindlichen einzelnen Sensormodule zu einem Sensornetzwerk zusammenschaltbar, wodurch gleiche als auch kombinatorische Messungen nicht nur am selben Ort, sondern an verschiedenen Orten durchführbar sind. Damit lässt sich u.a. die Messreichweite erhöhen und/oder die Genauigkeit und/oder die Messfrequenz verbessern.

Mit dem in den erfindungsgemäßen Installationsgeräten integrierten Sensor- und/oder Funkmodul kann eine Vielzahl von weiteren Anwendungsfeldern bedient werden.

Dazu zählen unter anderem:
- Eine Anwesenheits- und/oder Mustererkennung mittels Bewegung-/Beschleunigungssensormodulen und Kombinatorik dieser mit Feldstärkesensormodulen, um beispielsweise Veränderungen des gemessenen Erdmagnetfelds zu detektieren; durch Kombination mit VOC- Sensormodulen, um z.B. Änderungen in der Verteilung der Stoffanteile (Gasanteile) in der Luft zu detektieren.

- Eine Einbruchsmeldung, beispielsweise mittels Luftdrucksensormodulen, welche das Öffnen eines Fensters detektieren und Kombination mit Bewegung-/Beschleunigungssensormodulen, Feldstärkesensormodulen und/oder VOC-Sensormodulen.
- Warnmeldungen, beispielsweise mittels Gassensormodulen, welche bestimmte Gaskonzentrationen ermitteln und bei Grenzwertüberschreitung einen Alarm auslösen (z.B. bei Störungen bei Gasfeueranlagen).

Die mit der Erfindung erzielbaren Vorteile bestehen insbesondere darin, dass eine Erweiterung der Installationsgeräte mit Funktionalitäten der Gebäudesystemtechnik, wie beispielsweise Messfunktionen von Umweltbedingungen, ohne konstruktiven/mechanischen Änderungen an den Schaltern/Tastern/Dimmern/Steckdosen notwendig ist. Durch die Funktionserweiterung kann der Anwendungsbereich des Installationsgerätes deutlich verbessert werden.

Eine einfache Umrüstung bzw. bedarfsgerechte Anpassung bereits installierter Installationsgeräte an neue Anforderungen der Gebäudesystemtechnik, wie der Bereitstellung von Messfunktionen von Umweltbedingungen, von Überwachungsfunktionen, Übertragungsfunktionen und/oder Steuerfunktionen, lässt sich in einfacher Weise realisieren, indem nur der Abdeckrahmen des Installationsgerätes mit einem Abdeckrahmen mit integriertem Sensor- und/oder Funkmodul ausgetaucht wird und Designfaktoren des jeweiligen Schalterprogramms erhalten bleiben.

Auch auf zusätzliche Installationsorte für die Realisierung der Zusatzfunktionen der Gebäudesystemtechnik kann verzichtet werden.

Durch die Integration der Energieversorgungseinheit im oder am Rahmen des Installationsgerätes steht eine permanente Energieversorgung durch das Installationsgerät selbst (z.B. 230 V∼; als 2- und 3-Draht Version) zur Verfügung, welche die Messfunktion als auch Übertragungsfunktion gewährleisten.

Mit der Ausstattung des Abdeckrahmens mit dem wenigstens einem Sensor- und/oder Funkmodul bleibt die vorhandene Funktion von Schalter, Taster, Dimmer oder Steckdose erhalten, da die vorhandenen Anschlüsse/ Einsätze nicht durch die Funktion des im oder am Abdeckrahmen befindlichen Sensor- und/oder Funkmoduls beeinflusst werden.

Die Erfindung wird nachstehend anhand der in den Zeichnungen dargestellten Ausführungsbeispiele erläutert. Es zeigen:
- **Fig.**1: eine Explosionsdarstellung eines beispielhaften Installationsgerätes aus dem Stand der Technik,
- **Fig.** 2: eine Draufsicht auf die im montierten Zustand zur Wand weisenden Rückseite eines beispielhaften Abdeckrahmens des erfindungsgemäßen Installationsgerätes,
- **Fig.** 3: eine Draufsicht auf die im montierten Zustand zur Wand weisenden Rückseite eines weiteren beispielhaften Abdeckrahmens des erfindungsgemäßen Installationsgerätes,
- **Fig.** 4: einen 2fach- Abdeckrahmen einer weiteren Ausführungsform des erfindungsgemäßen Installationsgerätes,
- **Fig.** 5: ein beispielhaftes Sensor- und/oder Funkmodul, und
- **Fig.** 6: eine Draufsicht auf die Rückseite und einer Schnittansicht eines beispielhaften Abdeckrahmens mit mehreren Bauräumen zur Aufnahme von Sensormodul, Funkmodul und/oder Energieversorgungseinheit sowie eine Schnittdarstellung durch den Abdeckrahmen.

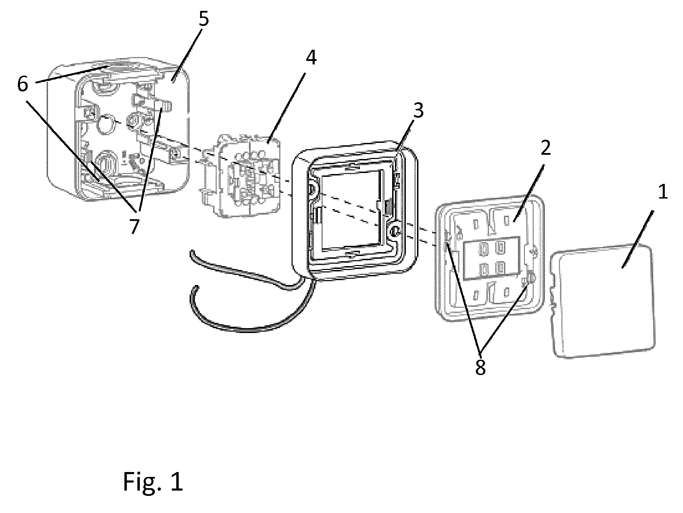

In der **Fig.** 1 ist ein aus dem Stand der Technik bekannter mittels eines Wippschalterbedienelements 1 bedienbarer mechanischer Schalter in Explosionsdarstellung dargestellt. Der Schalter ist mit einem als Kippschaltereinsatz ausgebildetem Schalteinsatz 4 und einem als Aufputzeinsatz ausgebildetem Gehäuseunterteil 5 mit Öffnungen zur Leitungseinführung 6 und Halterungen zur Fixierung des Funktions- oder Schalteinsatzes 7 ausgestattet und durch einen beleuchtbaren Abdeckrahmen 3 komplettiert. Zwischen Abdeckrahmen 3 und Wippbedienelemment 1 ist eine Dichtung 2 vorgesehen, an deren Bajonett-Schnellverschlüsse 8 das Wippbedienelement 1 befestigt wird.

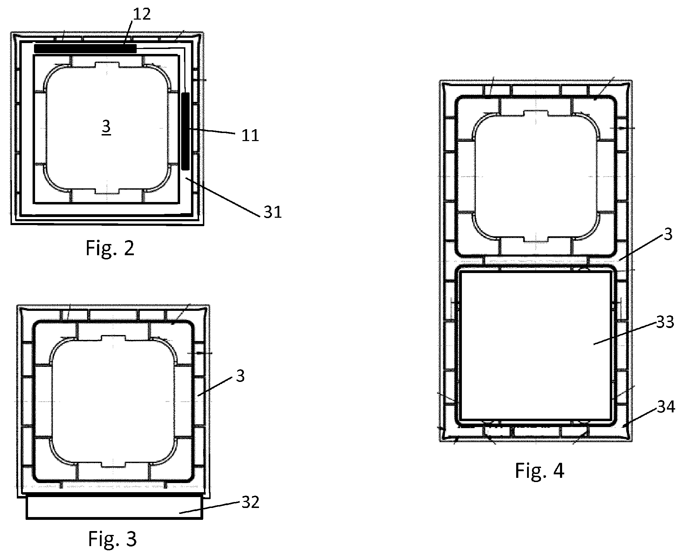

**Fig.** 2 zeigt eine Draufsicht auf die Rückseite eines beispielhaften erfindungsgemäßen Abdeckrahmens 3 für ein Installationsgerät der Haus- oder Gebäudeinstallationstechnik mit erweiterter Funktionalität für die Gebäudesystemtechnik. An der zur im montierten Zustand an der Wand befindlichen Rückseite des Abdeckrahmens 3 ist erfindungsgemäß ein Bauraum 31 gebildet, in dem sich wenigstens ein Sensor- und/oder Funkmodul 11 befindet. Das Sensor- und/oder Funkmodul 11 übernimmt Mess- und/oder Übertragungsfunktionen der Gebäudesystemtechnik.

Neben einer Verbindung zwischen dem im oder am Abdeckrahmen 3 befindlichen Sensor- und/oder Funkmodul 11 und den Kontaktelementen für einen Anschluss an externe Anschlussleitungen des Schalter- oder Funktionseinsatzes bieten sich weitere Arten der Energieversorgung für dieses Modul 11 an.

Zur Energieversorgung des Sensor- und/oder Funkmodul 11 kann im Rahmen 3 eine Batterie- oder eine Akkumulatoreinheit 12 zur Energieversorgung untergebracht sein, die mit dem Sensor- und/oder Funkmodul 11 verbunden ist. Dazu ist in einer bevorzugten Ausführungsform im Rahmen 3 wenigstens ein zusätzliches Fach vorgesehen, welches beispielsweise bei einem mittels Spritzgussverfahren hergestellten Rahmen 3 bei der Rahmenherstellung ausgespart wurde. In diesem Fach kann auch eine Energieversorgungseinheit 12 angeordnet sein, die Wireless Power Verbindungen, Spulen, Funkwellen, Energiesammler usw. nutzt.

Ist im Rahmen 3 eine Akkumulatoreinheit 12 zum Betrieb des Sensor- und/oder Funkmoduls 11 angeordnet, kann das Nachladen des Akkus über eine USB-Verbindung, welche in den Rahmen 3 eingelassen ist, erfolgen.

Alternativ kann das Nachladen des Akkus über eine Wireless Power Verbindung, welche in den Rahmen 3 eingelassen oder ebenfalls im zusätzlichen Fach untergebracht ist, realisiert sein.

Auch kann die Vorderseite des Rahmens 3, beispielsweise mit einer Solarfläche zur energieautarken Energieversorgung, ausgestattet sein.

**Fig.** 3 zeigt eine Draufsicht auf die Rückseite eines weiteren beispielhaften Abdeckrahmens 3 des erfindungsgemäßen Installationsgerätes. Hier ist eine eigenständige, beispielsweise als Spritzgussteil ausgeführte Aufnahme 32 für das Sensor- und/oder Funkmodul 11 und/oder die Energieversorgungseinheit 12 vorgesehen, welches am Rahmen 3 angebracht, vorzugsweise geklippt, ist.

Am Spritzgussteil 32 sind Laschen angeordnet, die von hinten in den Rahmen 3 greifen, und somit das Spritzgussteil 32 am Rahmen 3 halten. Vorzugsweise haben die Laschen eine Stärke bzw. Dicke zwischen ca. 0,3 und ca. 0,5 mm, um einen Tapetenausgleich zu ermöglichen.

Alternativ kann das Spritzgussteil 32 auch mit einer selbstschneidenden Schraube direkt am Rahmen 3 angebracht, angeklebt oder durch wenigstens einen Magneten, Klettband, usw. am Rahmen 3 gehalten sein.

Die Verwendung des Spritzgussteiles 32 mit integriertem Sensor- und/oder Funkmodul 11 und/oder Energieversorgungseinheit 12 ermöglicht in vorteilhafter Weise eine problemlose Nachrüstung an jedem beliebigem Rahmen.

**Fig.** 4 zeigt einen 2fach- Abdeckrahmen 3 einer weiteren Ausführungsform des erfindungsgemäßen Installationsgerätes. Dieser Abdeckrahmen 3 ersetzt einen zuvor installierten 1fach-Rahmen 3. Der gezeigte 2fach- Abdeckrahmen 3 ist in seinem unterem Rahmenteil 34 mit einer sogenannten Blindabdeckung 33 oder einem ausgespritzten Element versehen, welche an der im montierten Zustand an der Wand befindlichen Rückseite der Blindabdeckung oder dem ausgespritztem Element den Bauraum 31 für das Sensor- und/oder Funkmodul 11 und/oder die Energieversorgungseinheit 12 bilden. Anstelle des 2fach- Abdeckrahmens 3 ist diese Ausführungsform auch auf Mehrfachabdeckrahmen anwendbar.

**Fig**. 5 zeigt ein beispielhaftes Sensor- und/oder Funkmodul 11, welches in den Bauraum 31 im oder am Abdeckrahmen 3 einsetzbar ist.

Das im Bauraum 31 befindliche Sensor- und/oder Funkmodul 11 kann vorzugsweise eines oder mehrere der folgenden folgende Mess- und Übertragungsmittel 11 aufweisen:
- Messsensor,
- Mikroprozessor,
- Speicher,
- Netzteil/Spannungswandler,
- Übertragungseinheit mit Sender/Empfänger und/oder
- Antenne

Somit ist in vorteilhafter Weise eine einfache Umrüstung bzw. bedarfsgerechte Anpassung eines bereits installierten Installationsgerätes an neue Anforderungen der Gebäudesystemtechnik realisierbar. Dazu wird lediglich der Abdeckrahmen 3 des Installationsgerätes ausgetauscht oder mittels einer, vorzugsweise als Spritzgussteil ausgeführten Aufnahme für Sensor- und/oder Funkmodul 11 und/oder Energieversorgungseinheit 12 erweitert.

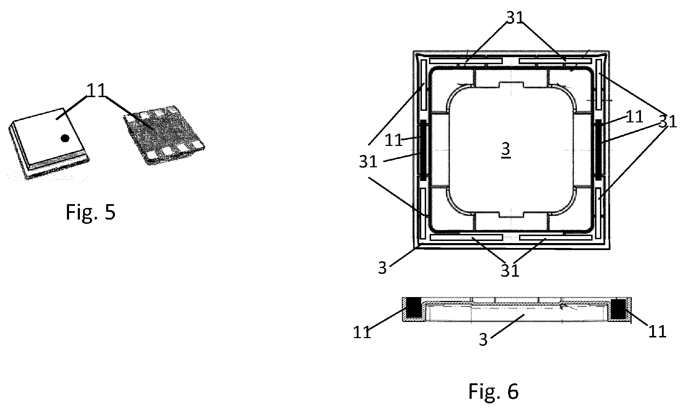

**Fig.** 6 zeigt eine Draufsicht auf die Rückseite eines beispielhaften Abdeckrahmens 3 und eine Schnittansicht durch den Abdeckrahmen mit mehreren Bauräumen 31 zur Aufnahme von Sensormodul 11, Funkmodul 11 und/oder Energieversorgungseinheit 12 sowie eine Schnittdarstellung durch den Abdeckrahmen 3, welche die vom jeweils dafür vorgesehenen Bauraum 31 aufgenommenen Sensor- und/oder Funkmodule 11 zeigt.

Bezuaszeichenliste
- 1: Bedienungselement, Wippschalterbedienelement
- 2: Dichtung
- 3: Abdeckrahmen
- 4: Schalteinsatz, Kippschaltereinsatz, Funktionseinsatz
- 5: Gehäuseteil, Unterputzeinsatz, Geräteeinsatz
- 6: Leitungseinführungen, Öffnungen für Leitungen
- 7: Halterungen zur Fixierung des Funktions- oder Schalteinsatzes
- 8: Bajonett-Schnellverschluss
- 11: Sensormodul, Funkmodul, Messsensor, Mess- und Übertragungsmittel
- 12: Energieversorgungseinheit, Batterieeinheit, Akkumulatoreinheit
- 31: Bauraum für Sensormodul, Funkmodul, Energieversorgungseinheit
- 32: Aufnahme für Sensor- und/oder Funkmodul und/oder Energieversorgungseinheit, Spritzgussteil
- 33: Blindabdeckung
- 34: unteres Rahmenteil

## Patentansprüche

1. Installationsgerät der Haus- oder Gebäudeinstallationstechnik mit erweiterter Funktionalität für die Gebäudesystemtechnik mit einem Schalt- oder Funktionseinsatz (4), einem Gehäuseteil (5) und Kontaktelementen für einen Anschluss an externe Anschlussleitungen und einem Abdeckrahmen, **dadurch gekennzeichnet, dass** wenigstens ein Sensor- und/oder Funkmodul (11) vom Abdeckrahmen (3) aufgenommen ist, welcher wenigstens einen Bauraum (31) zur Aufnahme des Sensor- und Funkmoduls (11) aufweist und das Sensor- und Funkmodul (11) Mess- und Übertragungsfunktionen der Gebäudesystemtechnik realisiert.

2. Installationsgerät nach Anspruch 1, **dadurch gekennzeichnet, dass** der Abdeckrahmen (3) wenigstens einen Bauraum (31) zur Aufnahme des Sensor- und Funkmoduls (11) aufweist.

3. Installationsgerät nach einem der vorherigen Ansprüche, **dadurch gekennzeichnet, dass** das Sensor- und Funkmodul (11) rückseitig, seitlich oder vorderseitig am oder im Abdeckrahmen (3) angebracht bzw. eingesteckt ist.

4. Installationsgerät nach Anspruch 1, **dadurch gekennzeichnet, dass** das Sensor- und Funkmodul (11) in einer, vorzugsweise als Spritzgussteil ausgeführten Aufnahme (32) untergebracht ist, welche am Rahmen (3) befestigt ist.

5. Installationsgerät nach Anspruch 1, **dadurch gekennzeichnet, dass** das Sensor- und Funkmodul (11) in einem von einer Blindabdeckung (33) des Rahmens (3) gebildetem Bauraum (31) untergebracht ist.

6. Installationsgerät nach einem der vorherigen Ansprüche, **dadurch gekennzeichnet, dass** die Energieversorgung des Sensor- und Funkmoduls (11) über Anschlussklemmen des Schalter- oder Funktionseinsatzes (4) realisiert ist.

7. Installationsgerät nach Anspruch 2 bis 5, **dadurch gekennzeichnet, dass** im Bauraum (31) zusätzlich eine Energieversorgungseinheit (12) zur Energieversorgung des Sensor- und Funkmoduls (11) untergebracht ist.

8. Installationsgerät nach einem der vorherigen Ansprüche, welches als Unterputz- oder Aufputzschalter, -taster, -dimmer oder -steckdose ausgeführt ist.

9. Installationsgerät nach einem der vorherigen Ansprüche, **dadurch gekennzeichnet, dass** mittels dem Sensor- und Funkmodul (11) eine oder mehrere Sendefunktionen, Messfunktionen der Umwelt und/oder Anwesenheits- und/oder Mustererkennungsfunktionen realisierbar sind.

10. Installationsgerät nach einem der vorherigen Ansprüche, **dadurch gekennzeichnet, dass** die Sensormodule (11) zu einem Sensornetzwerk zusammenschaltbar sind, wodurch gleiche als auch kombinatorische Messungen nicht nur am selben Ort, sondern an verschiedenen Orten durchführbar sind.

11. Abdeckrahmen für ein Installationsgerät der Haus- oder Gebäudeinstallationstechnik mit wenigstens einem Sensor- und Funkmodul (11) für Zusatzfunktionen der Gebäudesystemtechnik nach einem der vorherigen Ansprüche.
